# EUROPÄISCHE PATENTSCHRIFT

(11) **EP 0 677 429 B1**
(45) Veröffentlichungstag und Bekanntmachung des Hinweises auf die Patenterteilung: **19.01.2000**
(21) Anmeldenummer: 95105179.6
(22) Anmeldetag: 06.04.1995
(51) Int. Cl.: B60R 13/08, G10K 11/16

(54) **Schallabsorber für Kraftfahrzeuge**
Sound absorber for vehicles
Absorbeur de son pour véhicules

(30) Priorität: 15.04.1994 DE 4413009
(43) Veröffentlichungstag der Anmeldung: 18.10.1995
(73) Patentinhaber: MAGNA NÄHER GmbH, 71706 Markgröningen (DE)
(72) Erfinder: Stricker, Klaus, D-74321 Bietigheim-Bissingen (DE)
(74) Vertreter: Patentanwälte Ruff, Beier, Schöndorf und Mütschele

(56) Entgegenhaltungen:
- DE-A- 4 119 783
- DE-A- 4 137 706
- DE-C- 4 241 518
- DE-U- 9 301 234
- US-A- 4 313 524

## Beschreibung

Die Erfindung betrifft einen Schallabsorber für Kraftfahrzeuge in Form eines doppelwandigen flachen Resonanzkörpers mit einer, zahlreiche Löcher aufweisenden, Vorderwand und einer im wesentlichen ungelochten Rückwand.

Die Geräuschbelästigung durch Kraftfahrzeuge ist ein mit zunehmender Verkehrsdichte aktuell gewordenes Problem. Auf der einen Seite wird deshalb versucht, Fahrzeuge so zu konstruieren, daß vermeidbare Geräusche erst gar nicht entstehen. Auf der anderen Seite ist man bestrebt, unvermeidbare Geräusche durch geeignete Schallschutzmaßnahmen möglichst im Bereich ihres Entstehungsortes zu beseitigen.

Aus der DE 36 15 360 C2 und der EP 0 454 949 A2 sind flächige schalldämpfende Elemente bekannt, wobei letztere den Merkmalen des Oberbegriffs des Anspruchs 1 entsprechen und als sogenannte Helmholtz-Resonatoren ausgebildet sind. Die schalldämpfenden Elemente können vorzugsweise als Motorabschottung bzw. Motorabschirmung Verwendung finden. Die Resonatoren bestehen in der Regel aus einem doppelwandigen Plattenelement, bei dem eine Lochplatte dem Schallerzeuger, zum Beispiel einem Motor, zugewandt ist, und eine vom Geräuscherzeuger abgewandte ungelochte Platte als Rückwand vorgesehen ist. Einzelnen oder Gruppen von Löchern der Lochplatte sind jeweils akustisch getrennte Kammern im Zwischenraum zwischen den beiden Platten zugeordnet, die die jeweiligen Resonanzräume bilden. Unterschiedliche Größen der Kammern ergeben Resonanz und damit Schalldämpfung in unterschiedlichen Frequenzbereichen, so daß ein relativ weiter Frequenzbereich erfaßt werden kann. Die einzelnen Resonanzräume können durch gitterartige Trennwände im Zwischenraum zwischen den beiden Platten gebildet werden oder durch eine entsprechende kammerartige Ausformung der Plattenoberfläche unter Ausbildung der Resonanzräume. Dabei sind die einzelnen Resonanzräume entweder vollständig oder zumindest akustisch wirksam voneinander getrennt. Beispielsweise in Fig. 3 der DE 36 15 360 C2 ist anschaulich beschrieben, daß die bekannten Hohlraumresonatoren in Bereichen zwischen 500 Hz und 8.000 Hz wirksam sind. Eine Schalldämpfung in den unteren Frequenzbereichen, insbesondere im Bereich von ca. 200 Hz und niedriger, verursacht aber Probleme.

Es gibt auch Matten, die so verdichtet sind, daß sie nur noch in begrenztem Maße luftdurchlässig sind. Durch unregelmäßige Ausbildung der Wandstärke der Matten kann eine Schallabsorption im Frequenzbereich von 500 bis 2.000 Hz zu mehr als 50 % erreicht werden (vgl. DE 30 39 651 C2). Auch hier ist eine Schalldämpfung im niedrigen Frequenzbereich nicht möglich. Ferner neigen derartige Matten zu Verstopfungen bei Schmutzzutritt, so daß sie im Außenbereich von Kraftfahrzeugen keine Anwendung finden können.

Aus der DE 42 41 518 C1 ist ein reiner Helmholtz-Resonator, d.h. ein Lochresonator bekannt, der an der Innenseite eines Kotflügels eines Kraftfahrzeuges befestigbar ist und bei dem die zum Rad weisende Oberfläche flächendeckend mit einer Vielzahl verschieden ausgebildeter Helmholtz-Resonatoren bedeckt ist, um eine optimale akustische Wirksamkeit über einen breiten Frequenzbereich zu erzielen. Damit wird eine Dämpfung im Bereich von etwa 300 bis 4800 Hz erzielt. Eine Schallabsorption unterhalb 300 Hz ist jedoch mit Helmholtz-Resonatoren äußerst problematisch.

Der Erfindung liegt die Aufgabe zugrunde, einen Schallabsorber zu schaffen, der schmutzunempfindlich ausgestaltet werden kann und deshalb auch in Außenbereichen von Kraftfahrzeugen einsetzbar ist, und der eine gute Absorption in einem weiten Frequenzbereich, insbesondere auch bei tiefen Frequenzen von 250 Hz und darunter, ermöglicht.

Der erfindungsgemäße Schallabsorber ist dadurch gekennzeichnet, daß er als kombinierter Platten-/Lochresonator ausgebildet ist, zwischen der Vorderwand und der Rückwand ein gemeinsamer Hohlraum für alle Löcher der Vorderwand vorgesehen ist und die Vorderwand von einer schwingungsfähigen Lochplatte gebildet wird.

Bei den erwähnten Helmholtz-Resonatoren, die zu den Lochresonatoren gehören, erfolgt die Schallabsorption durch Abbremsung der Luftschwingung in den Löchern der Lochplatten im Zusammenwirken mit dem hinter den Löchern befindlichen Resonanzraum. Bei den Plattenresonatoren erfolgt die Schallabsorption durch gebremste Resonanzschwingungen einer der Schallquelle zugewandten geschlossenen Frontplatte eines Absorbers. Gemäß der Erfindung ist eine Kombination beider Resonatoren vorgesehen, wobei die Lochzahl und die Lochgröße der Frontplatte und die Eigenschwingungsfähigkeit der Front platte so aufeinander abgestimmt sind, daß Absorption in den Löchern zur Verminderung des Schalls im Bereich höherer Frequenzen als auch Schallabsorption durch Anregung der gelochten Frontplatte selbst zum Schwingen erfolgt, um Absorption im Bereich tieferer Frequenzen, insbesondere von 250 Hz und darunter zu erreichen. Dadurch ist es möglich, wirksame Schallabsorption bis in die zweite und dritte Motorordnung nach unten vorzunehmen.

Der gemeinsame Hohlraum ist frei von akustischen Unterteilungen. Der Summenquerschnitt der Löcher der Vorderwand ist im Vergleich zur Flächenausdehnung der Vorderwand vorzugsweise so klein gehalten, daß ein Teil der absorbierten Schallenergie in den Löchern vernichtet wird, während ein anderer Teil der Schallenergie durch Schwingungen der Vorderwand vernichtet wird. Die Schwingungen der Vorderwand können sowohl durch mechanische Dämpfungsmittel als auch die im Hohlraum eingeschlossene Luft gedämpft werden. Beim erfindungsgemäßen Schallabsorber liegt eine große Anzahl von Parametern vor, die aufeinander abgestimmt werden können, so daß die für den Einsatzzweck des Absorbers optimalen Absorptionseigenschaften erzielt werden. So führt beispielsweise bei sonst gleichbleibenden Parametern eine Vergrößerung des Volumens des Hohlraumes zu einer Verschiebung der Absorption in Richtung auf tiefere Frequenzen. In gleicher Richtung wirkt eine Verringerung des Lochanteils. Ebenfalls eine Verschiebung in Richtung auf tiefere Frequenzen bewirkt eine größere Materialstärke der gelochten Frontplatte bzw. Lochfolie. Eine Vergrößerung der einzelnen Löcher bewirkt demgegenüber eine Verschiebung der Absorption in Richtung auf höhere Frequenzen. Um einen möglichst großen Frequenzbereich wirksam zu erfassen, ist man beim erfindungsgemäßen Schallabsorber bestrebt, das Volumen des gemeinsamen Hohlraumes zwischen Vorder- und Rückwand möglichst groß zu halten, um tiefe Frequenzen wirksam erfassen zu können. Die Abstimmung auf die höheren Frequenzen läßt sich dann durch die Wahl der übrigen Parameter problemlos vornehmen. Wenn erwünscht, können im Hohlraum zusätzliche Vorkehrungen vorgesehen sein, um die Absorptionseigenschaften des Absorbers zu verändern, insbesondere zu verstärken, oder um die mechanische Stabilität des Absorbers zu erhöhen. So können an der Rückseite der Lochplatte luftdurchlässige und ggf. ebenfalls gelochte Schalldämpfungsmatten befestigt sein. Es ist auch möglich, Schalldämpfungsmatten im Innenraum des Schallabsorbers vorzusehen. Die Vernichtung von Schall wird dadurch wirksam erhöht. Bei einer Ausführungsform der Erfindung sind Schalldämpfungsmatten an mindestens einer Innenwand des Hohlraumes des Absorbers angeordnet, so daß der größte Teil des Hohlraumes leer bleibt. Bei einer anderen Ausführungsform ist der Hohlraum vollständig mit Fasermaterial ausgefüllt, zum Beispiel mit Baumwollfaservlies. Das Vlies bzw. Schalldämpf-Material kann eine Dichte von 30 bis 300 kg/m³, insbesondere ca. 80 kg/m³, haben.

Außerdem können zwischen Vorderwand und Rückwand Abstandhalter oder Verbindungsstege vorgesehen sein, die zu einer Versteifung des Absorbers, insbesondere bei größerer Flächenausdehnung, dienen und auch gezielt zur Beeinflussung der Schwingungseigenschaften der Lochplatte eingesetzt werden können. Auch die Ausbildung von Rippen an der Rückseite der Lochplatte ist möglich.

Für die Vorderwand ist mit Vorteil eine Lochplatte bzw. Lochfolie mit einer Materialstärke im Bereich von 0,5 bis 2 mm, insbesondere 0,8 bis 1,5 mm, vorgesehen. Bei einer solchen Materialstärke verbinden sich ausreichende Festigkeit und gute Schwingungseigenschaften. Die Biegesteifigkeit der Vorderwand liegt vorzugsweise im Bereich von 700 bis 4.000, insbesondere 1.000 bis 2.500 N·mm². Auch die Biegesteifigkeit ist ein veränderbarer Parameter, der sich auf die Absorptionseigenschaften auswirkt. Das Hohlraumvolumen des Schallabsorbers liegt vorzugsweise im Bereich von 1 bis 100 1, insbesondere 4 bis 10 1. Dies bedeutet, daß großvolumige Schallabsorber auch unterteilt werden können, sofern die Hohlräume der Teilabsorber ihrerseits wiederum ein relativ großes, d.h. für die Wirkung als kombinierter Platten-/Lochresonator ausreichendes Hohlraumvolumen aufweisen.

Die Lochgröße liegt vorzugsweise im Bereich von 1 bis 3 mm Innendurchmesser (bezogen auf kreisrunde Löcher). Der Summenquerschnitt der Löcher der Vorderwand liegt vorzugsweise unter 10 %, insbesondere unter 5 % der Oberfläche der Vorderwand. Dadurch wird der Luftwiderstand der Vorderwand so hoch gehalten, daß die Vorderwand selbst zum Schwingen kommt. Der Lochabstand kann in weiten Grenzen variieren. In der Praxis hat sich ein Lochabstand (Lochmitte zu Lochmitte) von 4 bis 17 mm, insbesondere 7 bis 11 mm, als vorteilhaft erwiesen. In der Regel liegt der Lochabstand bei ca. 9 mm. Die Löcher können unterschiedliche Querschnittsformen haben, wobei kreisrunde Löcher in der Praxis bevorzugt sind.

Die äußere Form des erfindungsgemäßen Schallabsorbers hängt weitgehend von den Platzverhältnissen im oder am Kraftfahrzeug ab. Im großen und ganzen verlaufen Vorder- und Rückwand im wesentlichen parallel zueinander. Abweichungen stören jedoch nicht, sie können sogar vorteilhaft sein. So hat die Rückwand mit Vorteil die Form eines Bauteils des Kraftfahrzeugs bzw. ist dieser in etwa angepaßt. Die Rückwand des erfindungsgemäßen Schallabsorbers wird in der Regel von einer gesonderten zweidimensionalen oder dreidimensionalen, geformten Kunststoffplatte gebildet, die bleibend und im wesentlichen dicht mit der Vorderwand verbunden, beispielsweise verschweißt ist. Vorderwand und Rückwand können unmittelbar miteinander verbunden sein. Vorzugsweise sind im wesentlichen geschlossene Seitenwände vorgesehen, die die Vorder- und Rückwand miteinander verbinden.

Bei einer bevorzugten Ausführungsform der Erfindung ist der Schallabsorber als Radhaus-Auskleidung zur Schallabsorption von Reifengeräuschen ausgebildet. Solche Radhaus-Schallabsorber eignen sich sowohl für Personenkraftwagen, Lastkraftwagen wie auch für Busse. Dabei ermöglicht es die Vielzahl der aufeinander abstimmbaren Parameter des Schallabsorbers die Absorptionseigenschaften auf die die Schallfrequenzen bestimmenden Reifengrößen und Reifenprofile abzustimmen. Der erfindungsgemäße Schallabsorber kann im Radhaus im wesentlichen parallel zur Lauffläche des Reifens im wesentlichen kreisbogenförmig gestaltet sein. Mit Vorteil ist es auch möglich, die Formgestaltung des Absorbers so vorzunehmen, daß auch andere Bereiche des Radhauses mit einbezogen werden, insbesondere Teile der zum Rad weisenden Seitenfläche des Radhauses. Der als Radhaus-Auskleidung ausgebildete Schallabsorber kann nicht nur die unmittelbaren Abrollgeräusche des Reifens absorbieren, sondern auch Geräusche, die durch auftreffendes Spritzwasser und durch Steinschlag erzeugt werden. Insbesondere zur Absorption von Steinschlag kann es vorteilhaft sein, Vorder- und Rückwand des Schallabsorbers elastisch miteinander zu verbinden, so daß auch auftreffender Körperschall gedämpft und nicht oder allenfalls in stark geminderter Form auf die Karosserie übertragen wird. Auch der gesamte Schallabsorber kann über elastische Verbindungsmittel an der Karosserie befestigt sein, um zusätzliche Dämpfungsmaßnahmen zu schaffen.

Der Schallabsorber kann auch als Motorraumverkleidung und als Motorkapselung ausgebildet sein, insbesondere zur Verkapselung des Motorraumes. In diesem Fall weist die Lochung der Vorderwand des Schallabsorbers zum Motor. Bei der Ausbildung als Motorraumverkleidung ist der Schallabsorber mit Vorteil zur Befestigung an der Unterseite des Motorraums ausgebildet.

Wenn der Schallabsorber zu einer Befestigung an einer Stelle vorgesehen ist, die Spritzwasser und dergleichen ausgesetzt ist, dann ist der Innenraum des Absorbers vorzugsweise frei von irgendwelchen feinporigen Elementen, wie Schalldämpfungsmatten und dergleichen. An tiefsten Stellen des Absorberhohlraumes können Wasseraustrittslöcher vorgesehen sein, damit eingedrungenes Wasser entweichen kann. Die Wasseraustrittslöcher sind in der Regel größer als die Absorptionslöcher der Lochplatte, damit durch letztere eingedrungener Schmutz auch wieder ungehindert austreten kann. Zumindest dann, wenn die Wasseraustrittslöcher nicht gleichzeitig die Funktion von Absorptionslöchern haben, ist ihr Summenquerschnitt kleiner, vorzugsweise höchstens halb so groß wie die Querschnittssumme der Absorptionslöcher der Vorderwand. Diese Maßnahme dient zur Aufrechterhaltung der Absorptionsfunktion der Löcher der Lochplatte, die nicht nur vom Querschnitt der Löcher, sondern auch von der Dämpfungsfunktion des geschlossenen oder zumindest im wesentlichen geschlossenen Hohlraumes bestimmt wird.

Sind offene Schallabsorptionslöcher den Rändern und/oder der Fahrbahn zugewandt, dann können die Schallabsorber bei Nässe auch aufgewirbelte Spritzwassernebel einfangen und wirken als zusätzlicher Spritzwasserschutz. Andererseits ist es auch möglich, die Lochplatte mit einer geschlossenen flexiblen Folie auf der der Schallquelle zugewandten Seite zu belegen oder zu überspannen. Eine derartige Folie kann, wenn gewünscht, eine wirksame Abdichtung des Absorbers gegen Eindringen von Spritzwasser und anderen Flüssigkeiten bewirken. Aufgrund der Flexibilität der Folie werden die Schwingungseigenschaften der Lochplatte selbst und die Schallschwingungen durch die Löcher hindurch nicht nachteilig beeinträchtigt. Zur Erhöhung der Wärmebeständigkeit des Schallabsorbers können dessen Außenflächen auch mit Metallfolie, insbesondere Aluminiumfolie, belegt sein, die an der Vorderseite der Lochplatte ggf. entsprechend gelocht ist. Derartige Metallfolien sind besonders bei der Ausbildung des Schallabsorbers als Motorraumverkleidung vorteilhaft, wo der Schallabsorber Wärmestrahlung des Motorblocks ausgesetzt ist. Zumindest die Vorderwand des Schallabsorbers, vorzugsweise im wesentlichen der gesamte Schallabsorber, besteht mit Vorteil aus thermoplastischem Kunststoff, insbesondere Polypropylen. Der Schallabsorber kann als Ganzes recycelbar sein. Falls erwünscht, kann der thermoplastische Kunststoff auch faserverstärkt sein, was seine Recycelbarkeit nicht beeinträchtigt.

Weitere Merkmale der Erfindung ergeben sich aus der nachfolgenden Beschreibung von bevorzugten Ausführungsformen in Verbindung mit der Zeichnung und den Unteransprüchen. Hierbei können die einzelnen Merkmale der Erfindung jeweils für sich allein oder in Kombinationen miteinander bei einer Ausführungsform der Erfindung verwirklicht sein. In der Zeichnung zeigen:
- Fig. 1: einen Längsschnitt durch einen als Radhaus-Auskleidung ausgebildeten Schallabsorber nach der Erfindung,
- Fig. 2: einen Querschnitt entlang der Linie A-A nach Fig. 1,
- Fig. 3: einen schematischen Querschnitt durch einen als Motorkapselverkleidung ausgebildeten Schallabsorber,
- Fig. 4: eine Draufsicht auf die Vorderseite der Ausführungsform nach Fig. 3 und die
- Fig. 5 bis 8: verschiedene Variationen des erfindungsgemäßen Schallabsorbers in schematischer Darstellung.

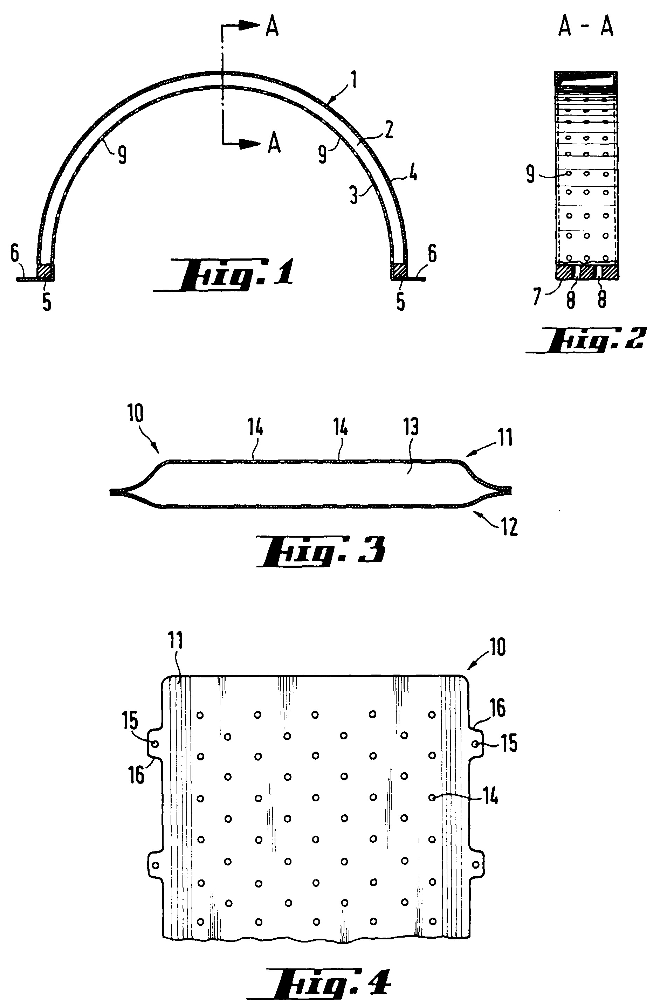

Der in den Figuren 1 und 2 dargestellte Schallabsorber nach der Erfindung ist als Radhaus-Auskleidung 1 ausgebildet. Der Absorber hat die Form eines Langrechtecks, das halbkreisförmig gebogen ist. Der Schallabsorber ist als Hohlkörper ausgebildet, dessen Hohlraum 2 sich über die gesamte Fläche der Radhaus-Auskleidung erstreckt, wobei der Hohlraum 2 von einer als zur Schallquelle, nämlich zum Rad, weisenden Vorderwand 3 einer zur Karosserie weisenden Rückwand 4 und schmalen Seitenwänden 5 eingeschlossen ist. Der Hohlraum ist leer und frei von irgendwelchen Unterteilungen, Füllungen, Verrippungen und dergleichen. Die Breite der Radhaus-Verkleidung beträgt ca. 25 cm. Die Länge des die Radhaus-Auskleidung bildenden Rechtecks beträgt ca. 120 cm und der lichte Abstand zwischen der Vorderwand 3 und der Rückwand 4 ca. 25 mm. Daraus errechnet sich ein Hohlraumvolumen von ca. 7,5 1. Die Vorderwand 3 der Radhaus-Auskleidung ist als Lochplatte ausgebildet, in der eine Vielzahl von parallelen Lochreihen vorgesehen ist. Der Lochdurchmesser beträgt jeweils 1,4 mm und der Lochabstand von Lochmitte zu Lochmitte 9 mm. Dies entspricht einem prozentualen Lochanteil von ca. 2 % Lochfläche, bezogen auf die Fläche der Vorderwand.

Die Materialstärke der Vorderwand liegt bei ca. 1 mm. Die Vorderwand besteht aus Polypropylen. Die Rückwand 4 besteht ebenfalls aus Polypropylen, wobei ihre Materialstärke ebenfalls bei 1 mm liegt. Die Seitenwände 5 bestehen aus einem dauerelastischen, gummiartigen Material, und erlauben ein elastisches Schwingen der Vorderwand 3 relativ zur Rückwand 4. An den unteren Seitenwänden sind Befestigungslaschen 6 zur Befestigung der Radhaus-Auskleidung an der Karosserie vorgesehen. Ferner weisen die Seitenwände 5 an den tiefsten Stellen 7 Wasseraustrittslöcher 8 auf, durch die in die Löcher 9 der Vorderwand 3 eingedrungenes Spritzwasser ausfließen kann.

Im montierten Zustand bewirkt die Radhaus-Auskleidung bei der Fahrt des Kraftfahrzeuges eine gute Absorption von Reifengeräuschen. Die hohen Frequenzen werden durch die Löcher 9 der Vorderwand 3 absorbiert, wobei der Hohlraum 2 als gemeinsamer Resonanzraum für alle Löcher dient. Obwohl die Vorderwand 3 recht schmal ist, kann sie aufgrund ihrer gegenüber der Rückwand elastischen Aufhängung durch niedriger Frequenzen zu Schwingungen angeregt werden und diese dadurch absorbieren. Durch die elastische Verbindung zwischen Vorderwand 3 und Rückwand 4 werden außerdem Geräusche durch Aufprallen von Spritzwasser und durch Steinschlag wirksam gedämpft.

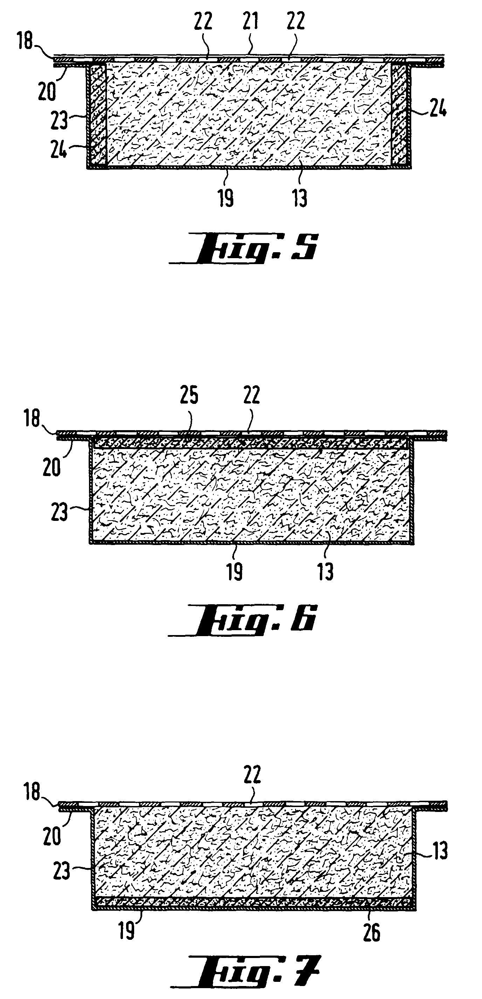

Die in den Figuren 3 und 4 dargestellte Ausführungsform der Erfindung zeigt eine Motorkapselverkleidung 10, bei der eine Vorderwand 11 und eine Rückwand 12 als schalenförmige, dreidimensionale flächige Körper ausgebildet und unter Einschluß eines Hohlraumes 13 unmittelbar abdichtend durch Verschweißung oder mechanische Verbindung miteinander verbunden sind. Die Motorkapselverkleidung wird als den Motorraum nach unten abschließender Schallabsorber eingesetzt. Die Löcher 14 aufweisende Vorderwand 11 ist an der Oberseite vorgesehen und weist zur Unterseite des Motors. Die Löcher 14 in der Vorderwand 11 sind bei dieser Ausführungsform in zueinander versetzten Lochreihen angeordnet. Die Vorderwand 11 kann trotz ihrer im wesentlichen starren Verbindung mit der Rückwand 12 Schwingungen aufnehmen, da sie eine große Flächenausdehnung hat. Aufgrund der dreidimensionalen Formgebung und/oder ggf. unterschiedlichen Lochgrößen kann die Vorderwand auch in unterschiedlichen Flächenbereichen mit unterschiedlichen Frequenzen schwingen. Die Motorkapselverkleidung weist im Randbereich, in dem die Vorderwand und die Rückwand miteinander verschweißt sind, mit Durchbrechungen 15 versehene Ausformungen 16 auf, die zur Befestigung der Motorkapselverkleidung am Fahrgestell dienen. In der Rückwand 12, die eine an sich geschlossene Unterseite der Motorkapselverkleidung bildet, können, ähnlich wie bei der vorher beschriebenen Ausführungsform, an den tiefsten Stellen Löcher vorgesehen sein, um das Abfließen von in die Motorkapselverkleidung gelangten Flüssigkeiten zu ermöglichen. Alternativ oder zusätzlich ist es möglich, die Vorderwand des Absorbers flüssigkeitsdicht, aber schalldurchlässig zu gestalten, wie nachfolgend beschrieben wird, um das Eindringen von Flüssigkeit zu verhindern. Zweckmäßigerweise hat bei der Motorverkapselung die Rückwand 12 eine größere Materialstärke als die Vorderwand 11. Sie kann bei 2 bis 3 mm oder mehr liegen.

Die in den Figuren 5 bis 7 dargestellten Ausführungsformen der Erfindung zeigen in schematischer Weise Schallabsorber, bei denen die Vorderwand 18 jeweils als ebene Lochplatte ausgebildet ist. Die Rückwand 19 ist als flache Schale oder flacher Topf ausgebildet, wobei ein flanschartig nach außen abragender Randbereich 20 zur Verbindung mit der Vorderwand 18 vorgesehen ist. Die Verbindung kann starr oder elastisch sein. Wie in Fig. 5 dargestellt, kann die Vorderwand 18 mit einer dünnen Folie 21 belegt sein, die als schalldurchlässige Membran wirkt, aber die Löcher 22 der Vorderwand 18 flüssigkeitsdicht verschließt. Die Folie ist flexibel ausgebildet und kann eine Materialstärke im Bereich von 50 µm haben. Die Folie dichtet nicht nur ab, sondern bringt auch zusätzliche bzw. verstärkte Absorption in gewünschten Frequenzbereichen. Sie kann beispielsweise aus Polyester gefertigt sein. Entlang der Innenflächen der Seitenwände 23 des Absorbers können schallabsorbierende Matten 24 angeordnet sein, die in den Hohlraum des Absorbers eingedrungene Schallenergie vernichten. Der Hohlraum des Absorbers kann auch vollständig mit schallabsorbierendem Material, wie Baumwollfaservlies, ausgefüllt sein. Dabei wird die Absorptionswirkung verbessert und, was erwünscht ist, zu niedrigeren Frequenzen verschoben. Aufgrund der geschlossenen Ausbildung des Absorbers kann er auch an solchen Stellen von Fahrzeugen angeordnet werden, die Feuchtigkeit und Nässe ausgeliefert sind, wie beispielsweise als Motorkapselverkleidung. Anstelle der dünnen Folie oder zusätzlich dazu kann auch ein Vlies auf der Außenseite der gelochten Vorderwand 18 angeordnet sein. Es kann ein Flächengewicht im Bereich von 30 bis 500 g/m² haben. Ein solches Außenvlies bringt eine zusätzliche Verbesserung der Absorptionswirkung. Das Außenvlies kann wasser-, öl- und schmutzabweisend ausgebildet sein.

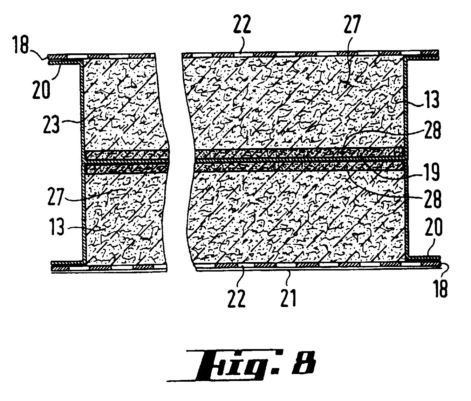

Die Figuren 6 und 7 zeigen offene Absorptionssysteme, bei denen die Löcher 22 der Vorderwand 18 offen sind. Bei der Ausführungsform nach Fig. 6 ist die zum Innenraum des Absorbers weisende Innenseite der Vorderwand 18 entlang im wesentlichen ihrer gesamten Fläche mit einer Absorptionsmatte 25 belegt, die durch die Löcher 22 der Vorderwand 18 eingedrungene Schallenergie wirksam zu absorbieren vermag. Auch hier kann der Innenraum des Absorbers vollständig mit Schallabsorbermaterial, insbesondere Fasermaterial, ausgefüllt sein.

Auch die Ausführungsform nach Fig. 7 enthält eine Absorptionsmatte 26, die bei dieser Ausführungsform an der Innenseite der Rückwand 19 angeordnet ist. Natürlich kann die Anordnung der Absorptionsmatten, wie sie in den Figuren 5, 6 und 7 beschrieben ist, auch in kombinierter Weise Anwendung finden, so daß auch größere Flächenteile oder die gesamte Innenseite des Absorbers schallschluckende Eigenschaften aufweisen. Eine vollständige Ausfüllung des Innenraumes bzw. Hohlraumes mit Absorbermaterial ist in den Figuren 5 bis 7 schematisch dargestellt. Da die Ausführungsformen nach Fig. 6 und 7 offene Vorderwände 18 besitzen, werden diese Ausführungsformen an solchen Stellen von Kraftfahrzeugen eingesetzt, die trocken bleiben. Natürlich können auch diese Ausführungsformen an den offenen Seiten mit Folien oder dgl. abgedeckt sein. Die Absorber können in ihrer Gestalt auch vorgegebenen Formen angepaßt sein. Die in der Zeichnung dargestellte Form dient lediglich zur Erläuterung. Die vollständige Ausfüllung des Schallabsorbers kann auch in der Weise erfolgen, daß der Raum 13 des Absorbers einerseits vollständig mit schallabsorbierendem Material 27 ausgefüllt ist. Anstelle der absorbierenden Matten, insbesondere anstelle der an der Rückwand 19 angeordneten Absorptionsmatte 26 der Ausführungsform nach Fig. 7, können zusätzliche weiche Schwerschichten 28 vorgesehen sein. Solche Schwerschichten haben eine besonders hohe Dichte. Sie können an der entsprechenden Wandung, z.B. an der Rückwand 19 des Absorbergehäuses anliegen oder diese sogar ersetzen. Soll der erfindungsgemäße Absorber nach zwei Seiten wirken, dann kann er im wesentlichen spiegelbildlich verdoppelt werden, wobei eine gemeinsame Rückwand 19 in der Regel ausreicht. In Fig. 8 ist eine derartige Ausführungsform dargestellt, die als Motorraumverkleidung und Motorkapselung dienen kann und im wesentlichen eine Verdoppelung der Ausführungsform nach Fig. 7 ist. Ein oberer Absorber entspricht der Ausführungsform nach Fig. 7, wobei an der Innenseite der Rückwand 19 eine weiche Schwerschicht 28 vorgesehen und der übrige Raum 13 mit Baumwollfasermaterial 27 ausgefüllt ist. Ein unterer Absorber besitzt mit dem oberen Absorber eine gemeinsame Rückwand 19, die auch auf ihrer zweiten Seite mit einer Schwerschicht 28 belegt ist. Auch hier kann die Rückwand 19 entfallen und eine gemeinsame Schwerschicht geeigneter Stärke vorgesehen sein. Zusätzlich sind die Löcher 22 der gelochten Außenwand 18 mit einer Folie 21 überdeckt, so daß kein Schmutzwasser eindringen kann. Der offene bzw. obere Absorber kann einem Motor zugewandt sein und der untere bzw. geschlossene nach außen weisen.

## Patentansprüche

1. Schallabsorber für Kraftfahrzeuge in Form eines doppelwandigen flachen Resonanzkörpers (1, 10) mit einer, zahlreiche Löcher (9; 14; 22) aufweisenden, Vorderwand (3; 11; 18) und einer im wesentlichen ungelochten Rückwand (4; 12; 19), dadurch gekennzeichnet, daß er als kombinierter Platten-/Lochresonator ausgebildet ist, zwischen der Vorderwand und der Rückwand ein gemeinsamer Hohlraum (2; 13) für alle Löcher (9; 14; 22) der Vorderwand (3; 11; 18) vorgesehen ist und die Vorderwand von einer schwingungsfähigen Lochplatte (3; 11; 18) gebildet wird.

2. Schallabsorber nach Anspruch 1, dadurch gekennzeichnet, daß der Summenquerschnitt der Löcher (9; 14; 22) im Vergleich zur Flächenausdehnung der Vorderwand (3; 11; 18) so klein gehalten ist, daß nur ein Teil der absorbierten Schallenergie in den Löchern vernichtet wird, während ein anderer Teil der Schallenergie durch Schwingungen der Vorderwand (3; 11; 18) vernichtet wird.

3. Schallabsorber nach Anspruch 1 oder 2, dadurch gekennzeichnet, daß die Schwingungen der Vorderwand (3; 11; 18) sowohl durch mechanische Dämpfungsmittel (5) als auch durch die im Hohlraum eingeschlossene Luft gedämpft werden.

4. Schallabsorber nach einem der vorhergehenden Ansprüche, dadurch gekennzeichnet, daß die Vorderwand (3; 11; 18) eine Materialstärke von 0,8 bis 1,5 mm besitzt.

5. Schallabsorber nach einem der vorhergehenden Ansprüche, dadurch gekennzeichnet, daß die Biegesteifigkeit der Vorderwand (3; 11; 18) 1000 bis 2500 N·mm² beträgt.

6. Schallabsorber nach einem der vorhergehenden Ansprüche, dadurch gekennzeichnet, daß er ein Hohlraumvolumen von 1 bis 100 1, insbesondere 4 bis 10 1, aufweist.

7. Schallabsorber nach einem der vorhergehenden Ansprüche, dadurch gekennzeichnet, daß der Summenquerschnitt der Löcher (9; 14; 22) der Vorderwand unter 10 %, insbesondere unter 5 % der Oberfläche der Vorderwand (3; 11; 18) beträgt.

8. Schallabsorber nach einem der vorhergehenden Ansprüche, dadurch gekennzeichnet, daß der Lochabstand 4 bis 17 mm, insbesondere 7 bis 11 mm, beträgt.

9. Schallabsorber nach einem der vorhergehenden Ansprüche, dadurch gekennzeichnet, daß er geschlossene Seitenwände (5) aufweist, die die Vorder- und Rückwand (3 und 4) miteinander verbinden.

10. Schallabsorber nach einem der vorhergehenden Ansprüche, dadurch gekennzeichnet, daß er als Radhaus-Auskleidung zur Schallabsorption von Reifengeräuschen ausgebildet ist.

11. Schallabsorber nach einem der Ansprüche 1 bis 9, dadurch gekennzeichnet, daß er als Motorraumverkleidung zur Verkapselung des Motorraumes ausgebildet ist.

12. Schallabsorber nach einem der vorhergehenden Ansprüche, dadurch gekennzeichnet, daß die Vorderwand (3) und die Rückwand (4) über elastische Verbindungsmittel (5) vorzugsweise im wesentlichen abdichtend miteinander verbunden sind.

13. Schallabsorber nach einem der vorhergehenden Ansprüche, dadurch gekennzeichnet, daß die Seitenwände (5), insbesondere bei einer Radhaus-Verkleidung (1), mindestens teilweise aus gummielastischem Material bestehen und eine elastische Verbindung zwischen Vorderwand (3) und Rückwand (4) schaffen.

14. Schallabsorber nach einem der vorhergehenden Ansprüche, dadurch gekennzeichnet, daß er an tiefen Stellen Ablauföffnungen (8) für Wasser und dergleichen aufweist, deren Querschnittssumme vorzugsweise kleiner ist als die Querschnittssumme der Absorptionslöcher (9) der Vorderwand (3).

15. Schallabsorber nach einem der vorhergehenden Ansprüche, dadurch gekennzeichnet, daß ein Innenraum des Absorbers zwischen Vorderwand (18) und Rückwand (19) mindestens teilweise, vorzugsweise vollständig, mit Absorbermaterial, insbesondere Fasermaterial, ausgefüllt ist.

16. Schallabsorber nach einem der vorhergehenden Ansprüche, dadurch gekennzeichnet, daß er nach mindestens zwei Seiten wirkend ausgebildet ist.

## Claims

1. Sound absorber for motor vehicles in the form of a double-wall, flat resonant body (1, 10) with a front wall (3, 11, 18) having numerous holes (9, 14, 22) and a substantially unperforated rear wall (4, 12, 19), characterized in that it is constructed as a combined plate/perforated resonator, between the front and rear walls is provided a common cavity (2, 13) for all the holes (9, 14, 22) of the front wall (3, 11, 18) and the front wall is formed by a vibratable perforated plate (3, 11, 18).

2. Sound absorber according to claim 1, characterized in that the total cross-section of the holes (9, 14, 22) is kept so small compared with the square dimensions of the front wall (3, 11, 18) that only a part of the absorbed sound energy is dissipated in the holes, whereas another part of the sound energy is dissipated by vibrations of the front wall (3, 11, 18).

3. Sound absorber according to claim 1 or 2, characterized in that the vibrations of the front wall (3, 11, 18) are damped both by mechanical damping means (5) and by the air enclosed in the cavity.

4. Sound absorber according to one of the preceding claims, characterized in that the front wall (3, 11, 18) has a material thickness of 0.8 to 1.5 mm.

5. Sound absorber according to one of the preceding claims, characterized in that the flexural rigidity of the front wall (3, 11, 18) is 1000 to 2500 N·mm².

6. Sound absorber according to one of the preceding claims, characterized in that it has a cavity volume of 1 to 100 and in particular 4 to 10 litres.

7. Sound absorber according to one of the preceding claims, characterized in that the total cross-section of the holes (9, 14, 22) of the front wall is below 10% and in particular below 5% of the surface of the front walls (3, 11, 18).

8. Sound absorber according to one of the preceding claims, characterized in that the hole spacing is 4 to 17 and in particular 7 to 11 mm.

9. Sound absorber according to one of the preceding claims, characterized in that it has closed side walls (5), which interconnect the front and rear walls (3 and 4).

10. Sound absorber according to one of the preceding claims, characterized in that it is constructed as a wheel case lining for absorbing tyre noise.

11. Sound absorber according to one of the claims 1 to 9, characterized in that it is constructed as an engine cowling for encapsulating the engine compartment.

12. Sound absorber according to one of the preceding claims, characterized in that the front wall (3) and the rear wall (4) are preferably substantially sealingly interconnected by elastic connecting means (5).

13. Sound absorber according to one of the preceding claims, characterized in that the side walls (5), particularly in the case of a wheel case lining (1), are at least partly made from rubber-elastic material and create an elastic connection between the front wall (3) and the rear wall (4).

14. Sound absorber according to one of the preceding claims, characterized in that at the low points it has drain openings (8) for water and the like and the total cross-section thereof is preferably smaller than that of the absorption holes (9) of the front wall (3).

15. Sound absorber according to one of the preceding claims, characterized in that an inner area of the absorber between the front wall (18) and the rear wall (19) is at least partly and preferably completely filled with absorber material, particularly fibrous material.

16. Sound absorber according to one of the preceding claims, characterized in that it is constructed to act to at least two sides.

## Revendications

1. Absorbeur de son pour véhicules automobiles, sous la forme d'un corps de résonance plat (1, 10) à double paroi avec une paroi avant (3; 11 ; 18) présentant de nombreux trous (9; 14 ; 22) et une paroi arrière (4 ; 12 ; 19) essentiellement dépourvue de trous, **caractérisé** en ce qu'il est conçu comme résonateur combiné à plaque et à trous, une cavité commune (2 ; 13) pour tous les trous (9 ; 14 ; 22) de la paroi avant (3 ; 11 ; 18) est prévue entre la paroi avant et la paroi arrière, et la paroi avant est formée par une plaque à trous (3 ; 11 ; 18) vibrante.

2. Absorbeur de son selon la revendication 1, **caractérisé** en ce que la section cumulée des trous (9; 14 ; 22) est maintenue, par rapport à la superficie de la paroi avant (3; 11 ; 18), suffisamment petite pour que seulement une partie de l'énergie acoustique absorbée soit anéantie dans les trous, tandis qu'une autre partie de l'énergie acoustique est anéantie par des vibrations de la paroi avant (3 ; 11 ; 18).

3. Absorbeur de son selon la revendication 1 ou 2, **caractérisé** en ce que les vibrations de la paroi avant (3; 11 ; 18) sont amorties tant par des moyens d'amortissement mécaniques (5) que par l'air enfermé dans la cavité.

4. Absorbeur de son selon une des revendications précédentes, **caractérisé** en ce que la paroi avant (3 ; 11 ; 18) possède une épaisseur de matériau comprise entre 0,8 et 1,5 mm.

5. Absorbeur de son selon une des revendications précédentes, **caractérisé** en ce que la rigidité en flexion de la paroi avant (3; 11 ; 18) est comprise entre 1000 et 2500 N . mm².

6. Absorbeur de son selon une des revendications précédentes, **caractérisé** en ce qu'il présente un volume de cavité de 1 à 100 l, notamment de 4 à 10 l.

7. Absorbeur de son selon une des revendications précédentes, **caractérisé** en ce que la section cumulée des trous (9; 14; 22) de la paroi avant est inférieure à 10 %, notamment inférieure à 5 % de la surface de la paroi avant (3 ; 11 ; 18).

8. Absorbeur de son selon une des revendications précédentes, **caractérisé** en ce que l'écartement des trous est de 4 à 17 mm, notamment de 7 à 11 mm.

9. Absorbeur de son selon une des revendications précédentes, **caractérisé** en ce qu'il présente des parois latérales fermées (5), qui relient entre elles la paroi avant (3) et la paroi arrière (4).

10. Absorbeur de son selon une des revendications précédentes, **caractérisé** en ce qu'il est conçu comme garniture de passage de roue pour absorber les bruits de pneumatiques.

11. Absorbeur de son selon une des revendications 1 à 9, **caractérisé** en ce qu'il est conçu comme habillage de compartiment-moteur pour blinder le compartiment-moteur.

12. Absorbeur de son selon une des revendications précédentes, **caractérisé** en ce que la paroi avant (3) et la paroi arrière (4) sont mutuellement reliées par des moyens de liaison élastiques (5), de préférence essentiellement en étanchéité.

13. Absorbeur de son selon une des revendications précédentes, **caractérisé** en ce que les parois latérales (5), notamment pour un habillage (1) de passage de roue, sont constituées au moins partiellement de matériau ayant l'élasticité du caoutchouc et réalisent une liaison élastique entre la paroi avant (3) et la paroi arrière (4).

14. Absorbeur de son selon une des revendications précédentes, **caractérisé** en ce qu'il présente en des points bas des ouvertures d'évacuation (8) pour de l'eau et analogues, dont la section cumulée est de préférence inférieure à la section cumulée des trous d'absorption (9) de la paroi avant (3).

15. Absorbeur de son selon une des revendications précédentes, **caractérisé** en ce qu'un espace intérieur de l'absorbeur, entre la paroi avant (18) et la paroi arrière (19), est rempli au moins partiellement, de préférence totalement de matériau absorbeur, notamment de matériau fibreux.

16. Absorbeur de son selon une des revendications précédentes, **caractérisé** en ce qu'il est conçu pour agir vers au moins deux côtés.
